# EUROPEAN PATENT APPLICATION

(11) **EP 2 178 194 A2**
(43) Date of publication of application: **21.04.2010**
(21) Application number: 09171790.0
(22) Date of filing: 30.09.2009
(51) Int. Cl.: H02K 41/02, H02K 41/03, H02K 15/04, H02K 3/28

(54) **Linear motor coil**

(30) Priority: 20.10.2008 JP 2008269652
(71) Applicant: Aisin Seiki Kabushiki Kaisha, Kariya-shi, Aichi 448-8650 (JP)
(72) Inventor: Nakajima, Nobuhisa, Kariya-shi Aichi 448-8650 (JP); Aikyo, Hideyuki, Kariya-shi Aichi 448-8650 (JP); Komatsu, Satoshi, Kariya-shi Aichi 448-8650 (JP); Yamamoto, Shigeharu, Kariya-shi Aichi 448-8650 (JP); Iguchi, Yousuke, Kariya-shi Aichi 448-8650 (JP); Hoshino, Akinori, Kariya-shi Aichi 448-8650 (JP); Morita, Tetsuya, Kariya-shi Aichi 448-8650 (JP); Yabui, Hiroaki, Kariya-shi Aichi 448-8650 (JP); Hiramatsu, Tomoko, Kariya-shi Aichi 448-8650 (JP)
(74) Representative: TBK-Patent

(57) **Abstract**

A linear motor coil includes a first and second coil portions (21, 22) arranged across a partition wall (52), a first connecting portion (8) provided between the first coil portion (21) and the second coil portion (22) and by means of which the conductive wire (7) crosses to the second coil portion from the first coil portion while a winding direction of the conductive wire is reversed, and a second connecting portion (9) by means of which the conductive wire (7) crosses to the first coil portion from the second coil portion while the winding direction of the conductive wire is reversed. The conductive wire (7) is formed by a single wire and of which a winding start point and a winding end point are provided at an end portion of the first coil portion (21) at a side opposite from a side where the partition wall (52) is provided.

## Description

### FIELD OF THE INVENTION

The present invention relates to a linear motor coil.

### BACKGROUND

A known linear motor includes coils and permanent magnets provided at an inside of the coils. Then, a direction and a magnitude of an electric current supplied to the coils are controlled to thereby generate an electromagnetic force at the coils in response to the supplied current. An attractive force or a repulsive force is generated between the coils and the permanent magnets accordingly. Such linear motor is used in a suspension apparatus for a vehicle in which the coils and the permanent magnets are separately provided at a body-side member and a wheel-side member of the vehicle. In this case, the attractive force or the repulsive force is generated between the coils and the permanent magnets to perform a load control on a suspension so that the movement of the vehicle in an up and down direction is cancelled. Accordingly, a driver of the vehicle has a comfortable driving feeling, being prevented from feeling the movement of the vehicle in the up and down direction.

According to the aforementioned linear motor, winding directions of the coils arranged adjacent to each other may be different from each other. For example, JPH06-62787U (hereinafter referred to as Reference 1) discloses a linear motor including multiple coils that are provided with respective coil terminals. The coil terminals of the coils are connected to each other by means of a terminal. In addition, JP2006-223090A (hereinafter referred to as Reference 2) discloses a linear motor. According to the linear motor disclosed in Reference 2, coils are formed by using a jig including a cylindrical-shaped conductive wire winding portion where a connecting line holding portion is provided. The jig is rotated in one direction in a state where a conductive wire engages with the connecting wire holding portion so that the conductive wire turns in a U-shape. One end of the conductive wire is wound on the jig in one direction. At the same time, the other end of the conductive wire is wound on the jig in the other direction away from the one direction. Thus, the single conductive wire forms the adjacent coils of which winding directions are different from each other relative to a bottom portion of the U-shape of the conductive wire serving as a connecting wire portion.

According to the coils disclosed in Reference 1, the terminal is necessary for connecting the coil terminals of the coils, which may lead to an enlargement of the coils. In order to downsize the coils, the number of windings of each coil is required to be reduced, for example. In such case, performance of the coils may decrease.

According to the coils disclosed in Reference 2, the single conductive wire forms the adjacent coils to thereby prevent the terminal from being provided. However, the conductive wire is wound, overlapping the connecting wire portion, which may lead to a portion of the coil where the connecting wire portion is formed to extend radially outwardly. When considering the downsizing of an apparatus where the linear motor is mounted, both ends of the conductive wire connected to a power supply are desirably arranged adjacent to each other. However, according to the coils disclosed in Reference 2, the ends of the conductive wire are arranged across the two coils. Thus, in order to connect the coils to the power supply, one end of the conductive wire follows along an outer periphery of the coil so as to be positioned in the vicinity of the other end of the conductive wire. The enlargement of the coils is inevitable and thus the number of windings of the conductive wire should be reduced for downsizing of the apparatus.

A need thus exists for a linear motor coil that is downsized without a reduction of the number of windings of a conductive wire.

### SUMMARY OF THE INVENTION

According to an aspect of the present invention, a linear motor coil includes a first coil portion obtained by a conductive wire wound in a first direction on a winding portion having a cylindrical shape, a second coil portion obtained by the conductive wire wound in a second direction on the winding portion, the first coil portion and the second coil portion being arranged across a partition wall on the winding portion, a first connecting portion provided between the first coil portion and the second coil portion and by means of which the conductive wire crosses to the first coil portion from the second coil portion while a winding direction of the conductive wire is reversed, and a second connecting portion by means of which the conductive wire crosses to the second coil portion from the first coil portion while the winding direction of the conductive wire is reversed, the first connecting portion and the second connecting portion being provided at the partition wall. The conductive wire is formed by a single wire and of which a winding start point and a winding end point are provided at an end portion of the first coil portion at a side opposite from a side where the partition wall is provided.

According to the aforementioned invention, the first coil portion and the second coil portion of which the winding directions are different from each other are arranged adjacent to each other by means of the single conductive wire. As a result, a terminal for connecting coil terminals of the coil portions is not required. In addition, the winding start point of the conductive wire is positioned at the end portion of the first coil portion at the side opposite from the side where the partition wall is provided. The conductive wire then passes through the second connecting portion to be wound on the second coil portion. Afterwards, the conductive wire passes through the first connecting portion to be wound on the first coil portion so that the winding end portion of the conductive wire is positioned at the end portion of the first coil portion at the side opposite from the side where the partition wall is provided. Therefore, it is not required to return the conductive wire from the second coil portion to the first coil portion so that both ends of the conductive wire are arranged adjacent to each other in a case where the winding end portion of the conductive wire is positioned at the second coil portion, for example. Further, a connecting wire portion of the conductive wire of the linear motor coil is positioned at the first connecting portion and the second connecting portion. Thus, the linear motor coil is prevented from projecting in the radial direction at the connecting wire portion that may occur according to conventional coils. The downsized linear motor coil may be achieved without a reduction of the number of windings of the conductive wire.

The first connecting portion and the second connecting portion are provided adjacent to each other in a circumferential direction of the partition wall.

Because the first connecting portion and the second connecting portion are arranged adjacent to each other, an area of the winding portion where the conductive wire is not wound is reduced in the vicinity of the first connecting portion and the second connecting portion where the conductive wire crosses. As a result, the conductive wire is effectively wound to thereby achieve the downsized coil.

The first connecting portion and the second connecting portion are constituted by a single cut portion that is formed at the partition wall.

Because the first connecting portion and the second connecting portion are constituted by the single cut portion, the first connecting portion and the second connecting portion are arranged adjacent to each other. As a result, the winding of the conductive wire is effectively performed to thereby achieve the downsized coil.

A partition plate is provided at the cut portion for dividing the first connecting portion and the second connecting portion.

Accordingly, the conductive wire that crosses to the second coil portion from the first coil portion and the conductive wire 7 that crosses to the first coil portion from the second coil portion 22 are separated from each other by means of the partition plate. Thus, when the conductive wire is wound on the winding portion, the conductive wire is prevented from being misaligned within the cut portion. The conductive wire is securely wound accordingly.

The conductive wire is wound to form a plurality of layers on the first coil portion and the second coil portion in a radial direction of the winding portion, and the conductive wire that is wound on the second coil portion is wound back on the first coil portion by one layer.

The conductive wire is wound on the first coil portion to form the number of layers one layer smaller than the desired number. Then, the conductive wire is wound on the second coil portion to form the desired number of layers. Afterwards, the conductive wire is wound on the first coil portion by one layer. Thus, the conductive wire is wound, without changing a winding diameter thereof, when the conductive wire crosses from the second coil portion to the first coil portion. The conductive wire smoothly crosses from the second coil portion to the first coil portion without separately providing a method or means for changing the winding diameter of the conductive wire.

The linear motor coil further includes an engagement portion that is formed at each of the first connecting portion and the second connecting portion for preventing the conductive wire from dropping off.

The winding direction of the conductive wire is reversed at the first connecting portion and the second connecting portion when the conductive wire is wound on the first coil portion and the second coil portion. Thus, the conductive wire is likely to drop off at the first connecting portion and the second connecting portion. The engagement portion is provided to prevent the conductive wire from dropping off from the first connecting portion or the second connecting portion to thereby securely hold the conductive wire. The conductive wire is securely wound on the first and second coil portions.

### BRIEF DESCRIPTION OF THE DRAWINGS

The foregoing and additional features and characteristics of the present invention will become more apparent from the following detailed description considered with the reference to the accompanying drawings, wherein:

Fig. 1 is a schematic view illustrating a suspension apparatus including a linear motor coil according to an embodiment;

Figs. 2A and 2B are exploded perspective views each illustrating a winding portion;

Fig. 3 is a perspective view illustrating the winding portion;

Fig. 4 is a plan view illustrating the winding portion;

Fig. 5 is a cross-sectional view of the winding portion;

Fig. 6 is a cross-sectional view taken along line VI-VI shown in Fig. 5;

Figs. 7A, 7B, 7C and 7D are cross-sectional views illustrating winding procedures of a conductive wire;

Fig. 8 is a diagram illustrating the winding procedures of the conductive wire;

Fig. 9 is a diagram illustrating the winding procedures of the conductive wire;

Fig. 10 is a diagram illustrating the winding procedures of the conductive wire;

Fig. 11 is a diagram illustrating the winding procedures of the conductive wire;

Figs. 12A and 12B are diagrams each illustrating first and second connecting portions; and

Fig. 13 is a diagram illustrating another example of the first and second connecting portions.

### DETAILED DESCRIPTION

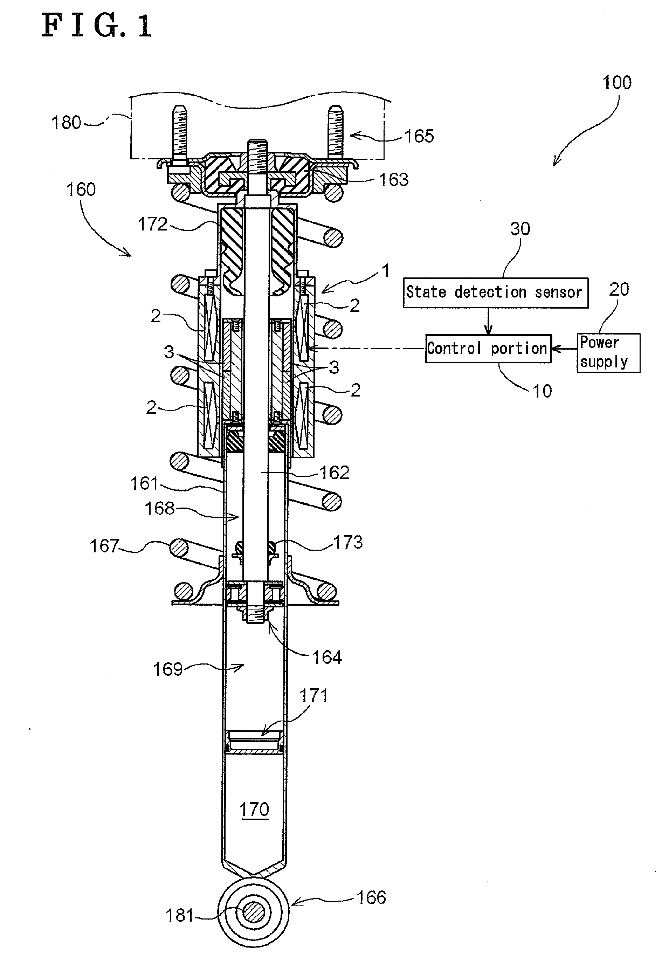

An embodiment will be explained with reference to the attached drawings. A case where a linear motor including a linear motor coil according to the present embodiment is applied to a suspension apparatus will be explained as an example. As illustrated in Fig. 1, a suspension apparatus 100 includes a control portion 10, a power supply 20, a state detection sensor 30, an electromagnetic suspension, and the like. A shock absorber 160 serving as a shock absorbing mechanism of the electromagnetic suspension includes a linear motor 1 having linear motor coils (hereinafter simply referred to as coils) 2 according to the present embodiment. The state detection sensor 30 includes various sensors for detecting a relative movement state between a body-side member 180 of the vehicle, which includes the suspension apparatus 100, and a wheel-side member 181, and an absolute movement state of the body-side member 180. The various sensors include a vertical acceleration sensor for detecting an acceleration applied in a vertical direction of the vehicle when the vehicle moves up and down, a height sensor for detecting a vehicle height, a vehicle speed sensor for detecting a vehicle speed, a steering angle sensor for detecting a steering angle of a wheel steering, and the like. In addition, an acceleration sensor for detecting acceleration applied in a longitudinal direction or a transverse direction of the vehicle when the vehicle accelerates, and the like may be provided. The absolute movement state of the body-side member 180 indicates a movement state of a vehicle, and the like arranged on a sprung portion of the electromagnetic suspension.

The shock absorber 160 of the electromagnetic suspension provided at the suspension apparatus 100 includes the linear motor 1. The linear motor 1 includes the coils 2 and permanent magnets 3 arranged separately at the body-side member 180 and the wheel-side member 181 (specifically, the coils 2 are arranged at the body-side member 180 while the permanent magnets 3 are arranged at the wheel-side member 181) so as to be relatively movable. A load between the coils 2 and the permanent magnets 3 is controlled by a power supply to the coils 2 (i.e., by controlling a magnitude and a direction of an electric current) so that an attractive force or a repulsive force is generated between the coils 2 and the permanent magnets 3.

The suspension apparatus 100 performs a PWM (pulse-width modulation) control on the power supply 20 so as to control the load output by the linear motor 1 based on a sensor signal from the state detection sensor 30. The PMW control is performed by the control portion 10. Specifically, the sensor signal from the state detection sensor 30 constituted by the vertical acceleration sensor, the height sensor, the vehicle speed sensor, the steering angle sensor, and the like is input to the control portion 10. Then, the control portion 10 calculates a controlled variable of the load (a load controlled variable) of the linear motor 1 based on the sensor signal so as to control the power supply 20 to supply the current depending on the load controlled variable output by the linear motor 1. According to such structure, the linear motor 1 of the suspension apparatus 100 generates the attractive power or the repulsive power between the coils 2 and the permanent magnets 3.

Next, details of the shock absorber 160 provided at the suspension apparatus 100 will be explained. As illustrated in Fig. 1, the shock absorber 160 constitutes a portion of the electromagnetic suspension that performs a vibration control on the body-side member 180 by means of the linear motor 1. The shock absorber 160 includes an outer case 161, a rod 162, an upper mount 163, a valve 164, the linear motor 1 having the coils 2 and the permanent magnets 3, a wiring harness, a first fitting portion 165 for attaching the shock absorber 160 to the body-side member 180, a second fitting portion 166 for attaching the shock absorber 160 to the wheel-side member 181, and the like. Because the permanent magnets 3 are fixed to the outer case 161 via a jig and the outer case 161 is mounted on the wheel-side member 181 by means of the second fitting portion 166, the permanent magnets 3 move in association with the wheel-side member 181. On the other hand, the coils 2 are mounted on the first fitting portion 165 via a jig so as to move in association with the body-side member 180. Accordingly, the body-side member 180 and the wheel-side member 181 are relatively movable by means of a relative movement between the coils 2 and the permanent magnets 3.

The coils 2 of the linear motor 1 are powered with the current supplied by the power supply 20 via the wiring harness. Because the electromagnetic force acts at the coils 2 in response to the supplied current, the attractive force or the repulsive force is generated between the coils 2 and the permanent magnets 3. A force in the vertical direction is thus generated at the shock absorber 160 so as to perform the load control on the electromagnetic suspension. The load control is performed so as to cancel the movement of the vehicle in the vertical direction based on the sensor signal of the state detection sensor 30. As a result, a driver of the vehicle can have a comfortable driving feeling, being prevented from feeling the movement of the vehicle in the vertical direction.

At a time of the load control performed by the shock absorber 160, a hydraulic control is performed depending on the situation so that the body-side member 180 is smoothly movable in the vertical direction in addition to the relative movement of the linear motor 1, or in a case where each wheel requires an extremely large load. A void space defined between the outer case 161 and the rod 162 is a first oil chamber 168. The first oil chamber 168 and a second oil chamber 169 are connected to each other via the valve 164. The shock absorber 160 is operated by means of an addition of the hydraulic pressure so that the movement of the body-side member 180 in the vertical direction is smoothly achieved.

The suspension apparatus 100 also includes a vehicle support spring 167 for supporting the vehicle, a partition 171 for dividing the second oil chamber 169 and an air chamber 170, a bump stopper 172, a rebound stopper 173, and the like.

When the state detection sensor 30 detects movement or acceleration of the vehicle in the vertical direction that occurs depending on a road surface condition or a driving condition of the vehicle in the aforementioned method, the load output by the linear motor 1 is controlled to thereby enhance or restrain the relative movement between the body-side member 180 and the wheel-side member 181 for shock absorption.

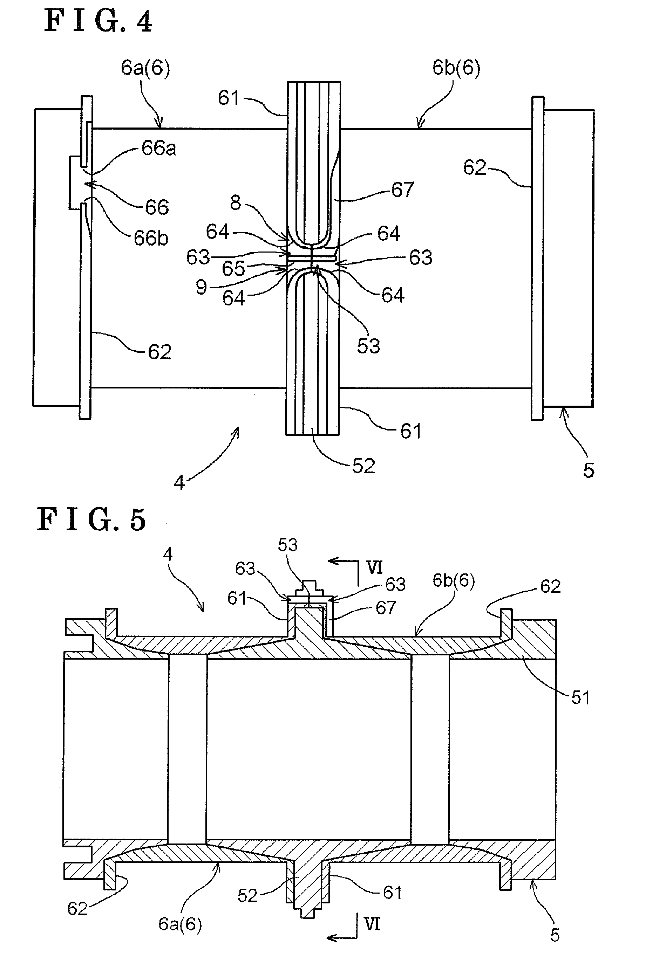

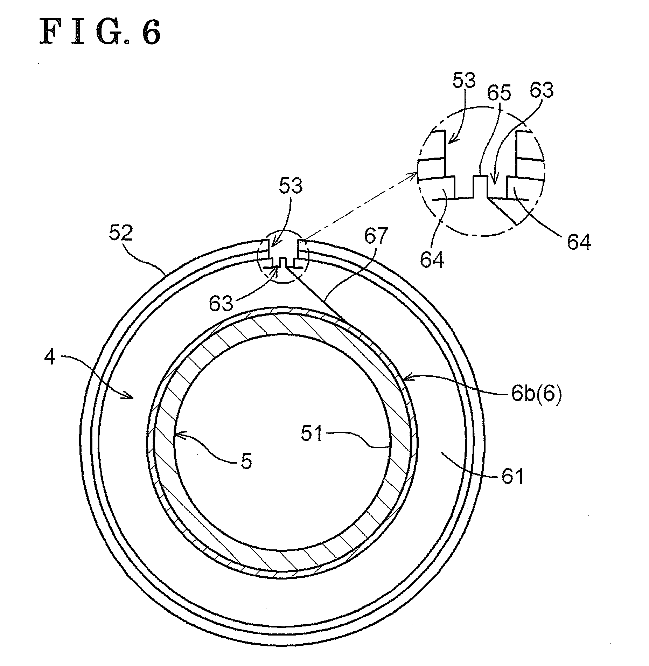

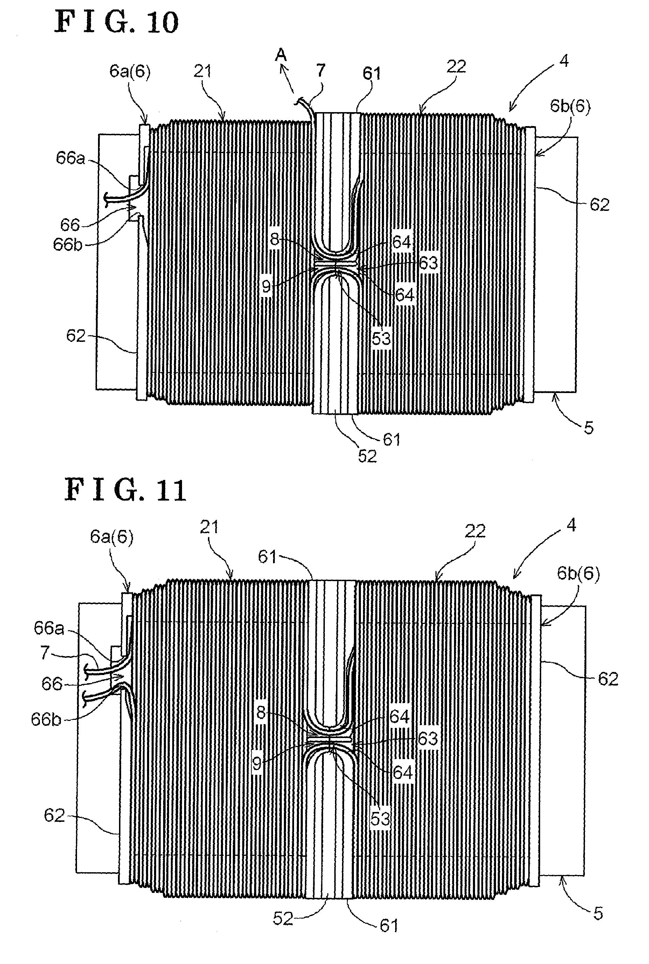

Next, details of the linear motor 1 will be explained. As illustrated in Figs. 1 and 11, the linear motor 1 includes the coils 2 and the permanent magnets 3 arranged inside of the coils 2. Each of the coils 2 is constituted by a conductive wire 7 wound on a bobbin 6 disposed around a yoke 5. As illustrated in Fig. 5, the yoke 5 includes a cylindrical portion 51 around which the bobbin 6 is disposed and a partition wall 52 formed at a longitudinally center of the cylindrical portion 51 over an entire periphery. As illustrated in Fig. 6, a cut portion 53 is formed at an outer peripheral portion of the partition wall 52.

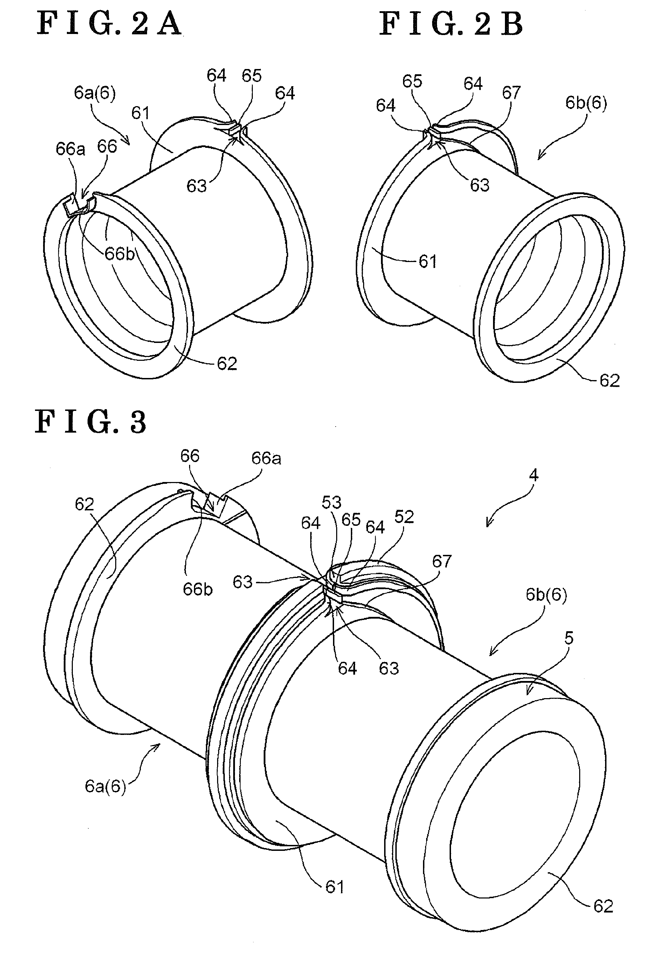

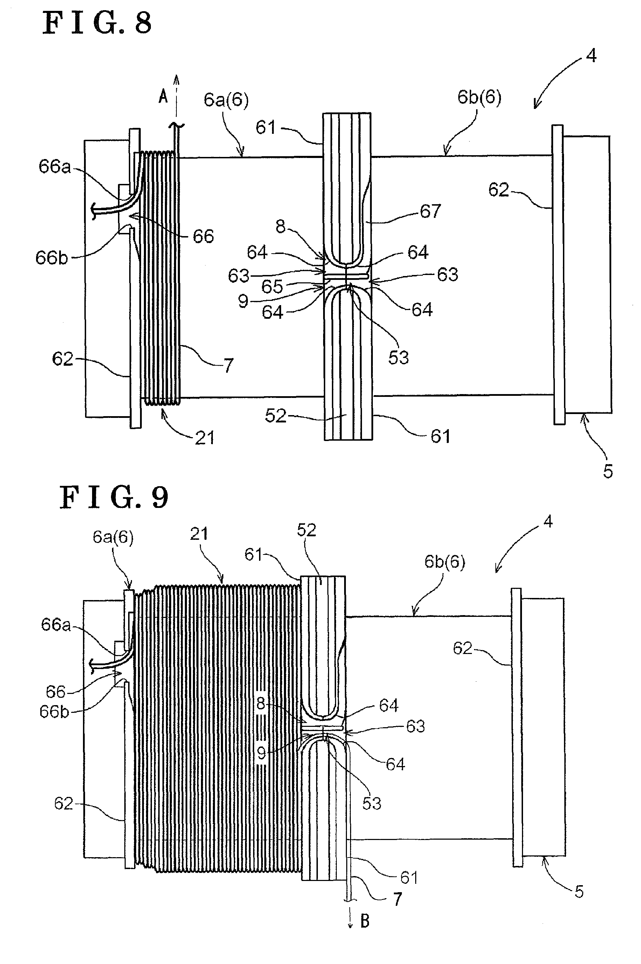

As illustrated in Figs. 2A, 2B, 3, and 4, each of the bobbins 6 includes a first bobbin 6a on which the conductive wire 7 is wound in a first direction A (see Fig. 8) and a second bobbin 6b on which the conductive wire 7 is wound in a second direction B (see Fig. 9) opposite from the first direction A. The first bobbin 6a has a cylindrical shape and includes flange portions 61 and 62 at both ends in the longitudinal direction thereof. The conductive wire 7 is wound on a portion arranged between the flange portions 61 and 62. A cut portion 63 is formed at an outer peripheral portion of the flange portion 61. Extending portions 64 extend in a longitudinally outward direction while being connected to a bottom of the cut portion 63. Then, a partition plate 65 is formed at a center of the bottom of the cut portion 63 and between the extending portions 64 in a width direction (i.e., a circumferential direction of the bobbin 6). A receiving portion 66a for receiving the conductive wire 7 when the conductive wire 7 is wound on the first bobbin 6a and a pullout portion 66b for sending an end portion of the conductive wire 7, which has already been wound on the bobbin 6, out of the bobbin 6 are formed at the flange portion 62. According to the present embodiment, the receiving portion 66a and the pullout portion 66b are formed as a single cut portion 66.

The second bobbin 6b has a shape substantially symmetrical to the first bobbin 6a. The second bobbin 6b differs from the first bobbin 6a in a point where the second bobbin 6b does not include the receiving portion 66a and the pullout portion 66b, i.e., the cut portion 66. In addition, the second bobbin 6b includes an inclined portion 67 that continues to bottoms of the extending portions 64. The inclined portion 67 extends on a falling gradient along a circumferential direction from the bottoms of the extending portions 64 to a winding start point of the conductive wire 7 on the outer periphery of the second bobbin 6b. The inclined portion 67 is formed by cutting a portion of the flange portion 61, for example, so that the inclined portion 67 is placed within a thickness area of the flange portion 61. The inclined portion 67 may be formed beforehand by means of a molding die at a time of molding.

As illustrated in Figs. 3, 4 and 5, the first bobbin 6a is disposed around the yoke 5 at one end in the longitudinal direction thereof while the second bobbin 6b is disposed around the yoke 5 at the other end in the longitudinal direction. At this time, as illustrated in Fig. 6, rotational phases of the cut portion 53 of the partition wall 52 and the extending portions 64 of the first and second bobbins 6a and 6b are brought to match each other. Then, the extending portions 64 of the first and second bobbins 6a and 6b are inserted into the cut portion 53 in such a manner that ends of the extending portions 64 of the first bobbin 6a and ends of the extending portions 64 of the second bobbin 6b are in contact with each other. Accordingly, the first bobbin 6a and the second bobbin 6b are disposed across the partition wall 52 around the yoke 5.

As illustrated in Figs. 3 and 4, two passages for connecting the first bobbin 6a and the second bobbin 6b are formed at the cut portion 53 across the partition plate 65 in a state where the first bobbin 6a and the second bobbin 6b are disposed around the yoke 5. A portion where one of the passages is formed at the cut portion 53 serves as a first connecting portion 8 wile a portion where the other one of the passages is formed at the cut portion 53 serves as a second connecting portion 9.

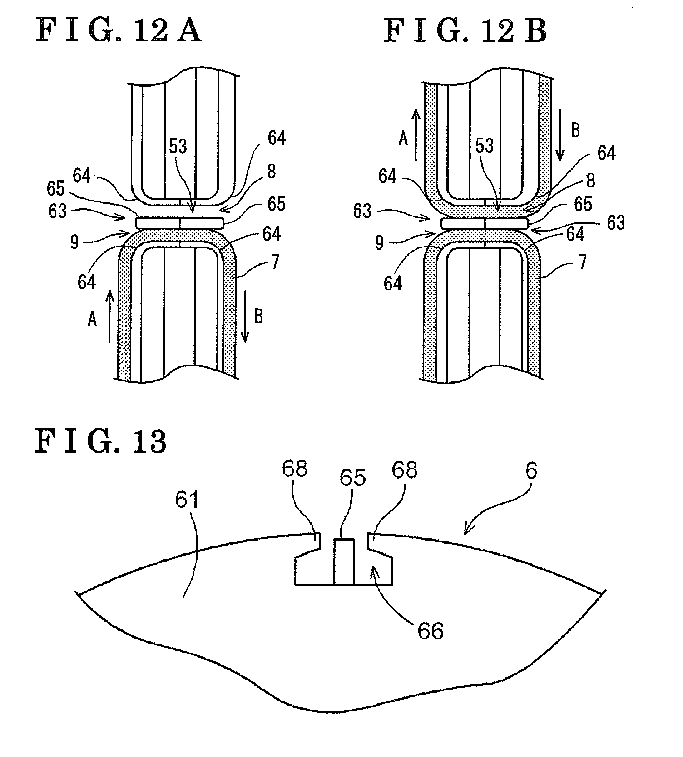

The conductive wire 7 is obtained by a metallic conductive wire such as a copper conductive on with which an insulation layer such as rubber and resin is covered. The conductive wire 7 may not be provided with the insulation layer and may be constituted by only the metallic conductive wire. As illustrated in Fig. 8, the conductive wire 7 is wound to form multiple layers on the first bobbin 6a in the first direction A. On the other hand, as illustrated in Figs. 9 and 10, the conductive wire 7 is wound to form multiple layers on the second bobbin 6b in the second direction B. At this time, the conductive wire 7 wound on the first bobbin 6a and the conductive wire 7 wound on the second bobbin 6b are formed by the single conductive wire. As illustrated in Fig. 12A, the conductive wire 7 crosses from the first bobbin 6a to the second bobbin 6b via the second connecting portion 9 so that the winding direction of the conductive wire 7 is changed from the first direction A to the second direction B. In addition, as illustrated in Fig. 12B, the conductive wire 7 crosses from the second bobbin 6b to the first bobbin 6a via the first connecting portion 8 so that the winding direction of the conductive wire 7 is changed from the second direction B to the first direction A. The conductive wire 7 that crosses to the first bobbin 6a is wound on the first bobbin 6a in the first direction A and pulled off from the pullout portion 66b. Accordingly, both of a winding start point and a winding end point of the conductive wire 7 are provided at an end portion of the first bobbin 6a opposite from the partition wall 52.

As mentioned above, the conductive wire 7 is wound on the yoke 5 via the first and second bobbins 6a and 6b. At this time, the first bobbin 6a, the second bobbin 6b, and the cylindrical portion 51 of the yoke 5 serve as a winding portion 4. In addition, a portion of the conductive wire 7 wound on the first bobbin 6a serves as a first coil portion 21. Further, a portion of the conductive wire 7 wound on the second bobbin 6b serves as a second coil portion 22.

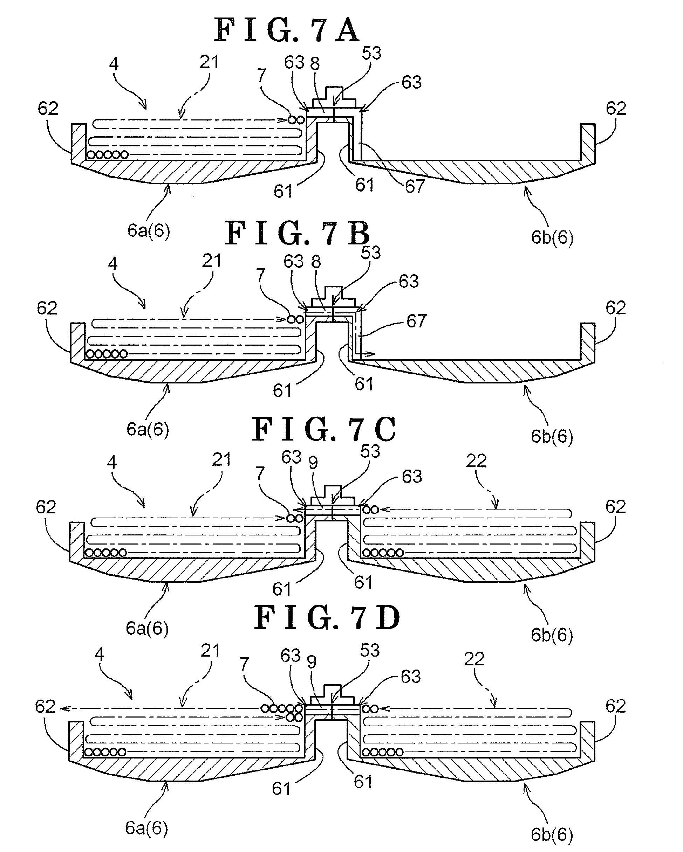

An example of winding of the conductive wire 7 will be explained. As illustrated in Figs. 7A and 8, the conductive wire 7 is led from the receiving portion 66a to the first bobbin 6a. Then, the conductive wire 7 is wound on the first bobbin 6a in the first direction A from a side where the flange portion 62, at which the receiving portion 66a is formed, is provided to a side where the flange portion 61, near which the partition wall 52 is arranged, is provided. When the conductive wire 7 is wound up to the flange portion 61, the conductive wire 7 is then wound towards the flange portion 62 in the first direction A. Such winding is repeated so that the conductive wire 7 is wound to form the multiple layers on the first bobbin 6a in the direction A.

As illustrated in Figs. 7B and 9, the conductive wire 7 is wound on the first bobbin 6a to form the number of layers one layer smaller than a desired number. At this time, the number of layers is specified so that the conductive wire 7 is positioned at the side where the flange portion 61 close to the partition wall 52 is provided. Then, the conductive wire 7 crosses to the second bobbin 6b via the second connecting portion 9. At this time, as illustrated in Fig. 12A, the conductive wire 7 turns its direction via the second connecting portion 9 at the partition wall 52, which causes the winding direction of the conductive wire 7 to change from the direction A to the direction B. Afterwards, the conductive wire 7 of which direction is turned is led to an outer periphery of the second bobbin 6b by means of the inclined portion 67.

As illustrated in Figs. 7C and 9, the conductive wire 7 is wound on the second bobbin 6b in the direction B from the side where the flange portion 61 near the partition wall 52 is provided to the side where the flange portion 62 is provided. When the conductive wire 7 is wound up to the flange portion 62, the conductive wire 7 is then wound towards the flange portion 61 in the second direction B. Such winding is repeated so that the conductive wire 7 is wound to form the multiple layers on the second bobbin 6b in the direction B.

As illustrated in Figs. 7C and 10, the conductive wire 7 is wound by the desired number of layers on the second bobbin 6b. At this time, the number of layers is specified so that the conductive wire 7 is positioned at the side where the flange portion 61 near the partition wall 52 is provided. The conductive wire 7 then crosses to the first bobbin 6a via the first connecting portion 8. At this time, as illustrated in Fig. 12B, the conductive wire 7 turns its direction via the first connecting portion 8 at the partition wall 52, which leads to the winding direction of the conductive wire 7 to be changed from the second direction B to the first direction A.

As illustrated in Figs. 7D and 11, the conductive wire 7 is wound by one layer in the direction B towards the flange portion 62 at which the pullout portion 66b is formed. When the conductive wire 7 is wound up to the flange portion 62, the conductive wire 7 is pulled off from the pullout portion 66b.

Accordingly, the single conductive wire 7 is wound on the first bobbin 6a in the direction A and is wound on the second bobbin 6b in the direction B. In addition, the winding start point and the winding end point of the conductive wire 7 are provided at the end portion of the first bobbin 6a opposite from the partition wall 52.

When the conductive wire 7 is wound, the winding direction thereof is reversed at the first connecting portion 8 and the second connecting portion 9. As a result, the conductive wire 7 may easily drop off at the first and second connecting portions 8 and 9. Thus, according to the aforementioned embodiment, an engagement portion is desirably formed at each of the first and second connecting portions 8 and 9 for preventing the conductive wire 7 from dropping off. As illustrated in Fig. 13, engagement portions 68 are formed at the extending portions 64 of the first bobbin 6a and the second bobbin 6b, respectively. Each of the engagement portions 68 is provided so as to extend from an upper end of a wall surface of the extending portion 64 in the circumferential direction. In addition, as illustrated in Fig. 13, a lower end of the engagement portion 68 overlaps an upper end of the partition plate 65 in a height direction so that the engagement portion 68 and the partition plate 65 form an opening connected to the first connecting portion 8 or the second connecting portion 9. A width of the opening is specified to be slightly smaller than a diameter of the conductive wire 7 so that the conductive wire 7 passes through the opening by means of an elastic deformation of the insulation coating. According to the aforementioned structure, the engagement portions 68 prevent the conductive wire 7 from dropping off from the first and second connecting portions 8 and 9, which leads to a secure holding of the conductive wire 7. Thus, the conductive wire 7 is securely wound on the first and second bobbins 6a and 6b. The engagement portions 68 may be formed at the partition wall 52 instead of the bobbin 6.

According to the aforementioned embodiment, the single cut portion 53 formed at the partition wall 52 serves as the first and second connecting portions 8 and 9. In this, case, for example, the cut portion 53 serving as the first connecting portion 8 and the cut portion 53 serving as the second connecting portion 9 may be separately formed. Further, three or more of the cut portions 53 may be formed in a radial direction of the partition wall 52. Then, the cut portions 53 may be selectively used as the first connecting portion 8 or the second connecting portion 9 depending on the winding state of the conductive wire 7.

According to the aforementioned embodiment, the winding portion 4 is constituted by the yoke 5 and the bobbin 6. Alternatively, for example, the winding portion 4 may be only constituted by the yoke 5 on which the conductive wire 7 is directly wound. Further, in such case, when the partition plate 65 and/or the engagement portion 68 are provided, the partition plate 65 and/or the engagement portion 68 may be directly formed at the yoke 5.
A linear motor coil includes a first and second coil portions (21, 22) arranged across a partition wall (52), a first connecting portion (8) provided between the first coil portion (21) and the second coil portion (22) and by means of which the conductive wire (7) crosses to the second coil portion from the first coil portion while a winding direction of the conductive wire is reversed, and a second connecting portion (9) by means of which the conductive wire (7) crosses to the first coil portion from the second coil portion while the winding direction of the conductive wire is reversed. The conductive wire (7) is formed by a single wire and of which a winding start point and a winding end point are provided at an end portion of the first coil portion (21) at a side opposite from a side where the partition wall (52) is provided.

## Claims

1. A linear motor coil comprising:
a first coil portion (21) obtained by a conductive wire (7) wound in a first direction (A) on a winding portion (4) having a cylindrical shape;
a second coil portion (22) obtained by the conductive wire (7) wound in a second direction (B) on the winding portion (4), the first coil portion and the second coil portion being arranged across a partition wall (52) on the winding portion;
a first connecting portion (8) provided between the first coil portion (21) and the second coil portion (22) and by means of which the conductive wire (7) crosses to the first coil portion (21) from the second coil portion (22) while a winding direction of the conductive wire is reversed; and
a second connecting portion (9) by means of which the conductive wire (7) crosses to the second coil portion (22) from the first coil portion (21) while the winding direction of the conductive wire is reversed, the first connecting portion and the second connecting portion being provided at the partition wall (52);
wherein the conductive wire (7) is formed by a single wire and of which a winding start point and a winding end point are provided at an end portion of the first coil portion (21) at a side opposite from a side where the partition wall (52) is provided.

2. The linear motor coil according to claim 1, wherein the first connecting portion (8) and the second connecting portion (9) are provided adjacent to each other in a circumferential direction of the partition wall (52).

3. The linear motor coil according to one of claims 1 and 2, wherein the first connecting portion (8) and the second connecting portion (9) are constituted by a single cut portion (53) that is formed at the partition wall (52).

4. The linear motor coil according to claim 3, wherein a partition plate (65) is provided at the cut portion (53) for dividing the first connecting portion (8) and the second connecting portion (9).

5. The linear motor coil according to any one of claims 1 through 4, wherein the conductive wire (7) is wound to form a plurality of layers on the first coil portion (21) and the second coil portion (22) in a radial direction of the winding portion (4), and the conductive wire (7) that is wound on the second coil portion (22) is wound back on the first coil portion (21) by one layer.

6. The linear motor coil according to any one of claims 1 through 5, further comprising an engagement portion (68) that is formed at each of the first connecting portion (8) and the second connecting portion (9) for preventing the conductive wire (7) from dropping off.
